(19) Europäisches Patentamt
European Patent Office
Office européen des brevets

(11) EP 4 727 214 A2

(12) EUROPEAN PATENT APPLICATION

(43) Date of publication:
15.04.2026 Bulletin 2026/16

(21) Application number: 25201001.2

(22) Date of filing: 09.09.2025

(51) International Patent Classification (IPC):
H04W 36/02 (2009.01)    H04W 36/00 (2009.01)
H04W 36/08 (2009.01)    H04W 36/18 (2009.01)
H04W 84/06 (2009.01)    H04W 84/04 (2009.01)
H04W 88/08 (2009.01)

(52) Cooperative Patent Classification (CPC):
H04W 36/083; H04W 36/023; H04W 36/185;
H04W 36/00692; H04W 84/042; H04W 84/06;
H04W 88/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.09.2024  IN 202441070748
06.08.2025  IN 202441070748

(71) Applicant: Samsung Electronics Co., Ltd.
Suwon-si, Gyeonggi-do 16677 (KR)

(72) Inventors:
• VRIND, Tushar
560048 Bangalore (IN)
• MADHURANTAKAM, Shrinath Ramamoorthy
560048 Bangalore (IN)
• DAS, Debabrata
560048 Bangalore (IN)

(74) Representative: Marks & Clerk LLP
15 Fetter Lane
London EC4A 1BW (GB)

(54) METHOD FOR ADAPTIVE AERIAL CELL REPLACEMENT MECHANISMS FOR EFFICIENT OPERATION IN WIRELESS COMMUNICATION SYSTEMS

(57) There is provided a method for a low-overhead Aerial Dual Active Protocol Stack (ADAPS) handover method. The method includes transmitting, by the source aerial cell, a handover request to the target aerial cell for one or more selected UEs based on one or more network parameters associated with the one or more selected UEs and the source aerial cell, obtaining aggregated data packets by aggregating the one or more data packets associated with the one or more selected UEs, compressing the aggregated data packets into a compressed payload, and transmitting the compressed payload to the target aerial cell.

FIG. 7

700

Determining the one or more network parameters associated with at least one of the plurality of UEs and the source aerial cell, wherein the plurality of UEs is connected with the source aerial cell — 701

Selecting one or more UEs from the plurality of UEs that require the HO from the source aerial cell to a target aerial cell based on the one or more determined network parameters — 702

Transmitting the HO request to the target aerial cell for the one or more selected UEs, wherein the target aerial cell prepares one or more network resources for the one or more selected UEs — 703

Receiving the acknowledgment of the transmitted HO request from the target aerial cell — 704

Transmitting the notification message to the one or more selected UEs for performing the HO by utilizing the DAPS — 705

Receiving, after transmitting the notification message, one or more data packets from the one or more selected UEs — 706

Aggregating one or more received data packets associated with the one or more selected UEs at the source aerial cell — 707

Compressing the aggregated data packets into a single payload — 708

Transmitting the compressed payload to the target aerial cell, to facilitate seamless transitions between aerial cells — 709

**Description**

BACKGROUND

1. Field

The disclosure generally relates to wireless communication systems, and more specifically relates to a method for adaptive aerial cell replacement mechanisms for efficient operation in wireless communication systems.

2. Description of Related Art

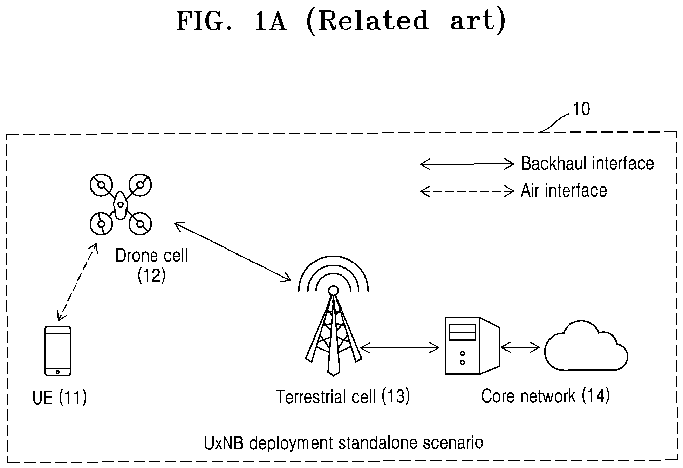

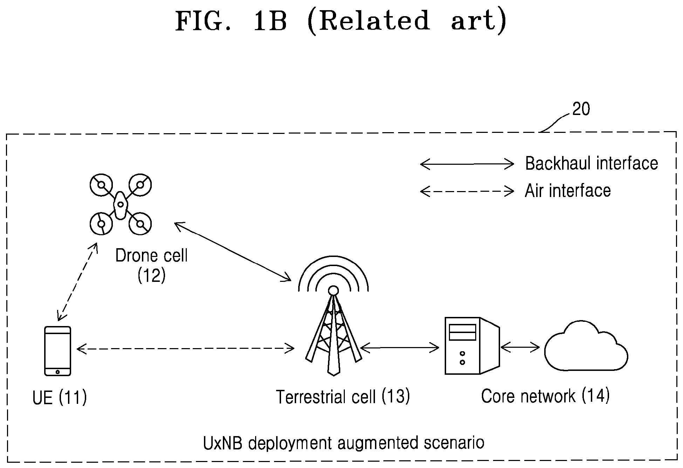

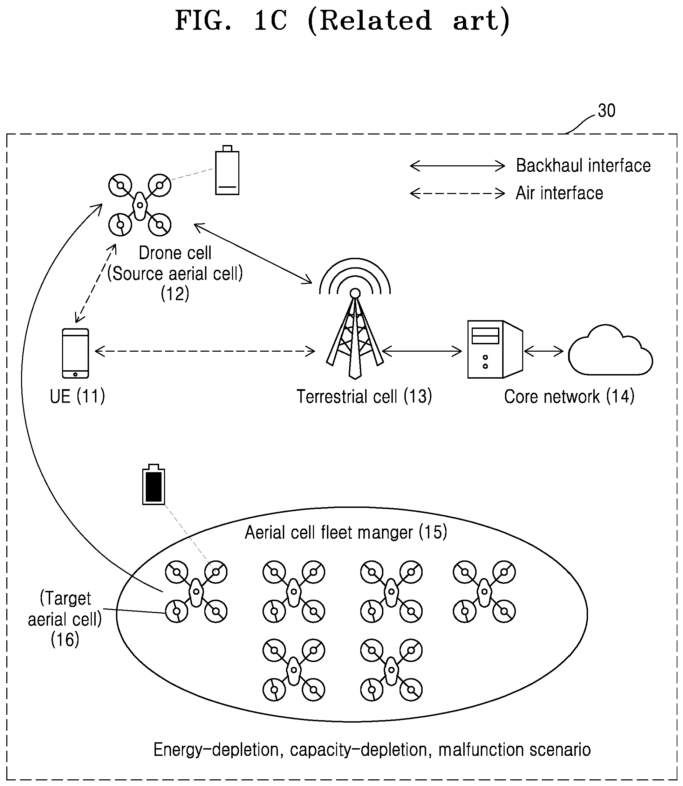

In wireless communication systems, aerial cells represent an innovative solution for wireless operators to enhance coverage and capacity without the significant costs and complexities associated with the deployment and maintenance of terrestrial network infrastructure, such as macro cells and small cells. The Third Generation Partnership Project (3GPP) designates this deployment as a Non-Terrestrial Network (NTN), which serves as a foundational element for the advancement of 6th Generation (6G) networks. In these 6G networks, cells are integrated into various aerial platforms capable of flight, navigation, and hovering at varying altitudes, as illustrated in **FIGS. 1A** and **1B.** For example, a Low Altitude Platform (LAP) is defined as a drone-based aerial system that can hover above User Equipment (UE) **11** at altitudes typically ranging from a few hundred meters. However, LAP-based aerial cell(s) (drone cell **12**) necessitate frequent replacements due to both periodic and aperiodic triggers, such as battery depletion, fluctuations in capacity demands, and mechanical failures during operation, as illustrated in **FIG. 1C.**

For instance, a payload capacity of a drone is generally limited to a few kilograms, necessitating a careful balance between battery size and LAP-based aerial cell equipment that must be prioritized for transport. Consequently, the operational duration of the LAP-based aerial cell **12** is restricted to approximately one hour. Thus, timely replacement of the LAP-based aerial cell **12** with a new LAP-based aerial cell (target aerial cell **16**) is critical when a battery level declines, as failure to do so would result in the drone being unable to maintain altitude or continue flight. Moreover, additional triggers for replacement of the LAP-based aerial cell **12** include: (a) the need to accommodate changes in network capacity, particularly when user demand increases, necessitating the deployment of a new LAP-based aerial cell with enhanced carrier bandwidth, and (b) maintenance requirements, such as addressing equipment malfunctions within the LAP-based aerial cell. Related art methodologies inadequately address these aperiodic triggers, highlighting a gap in current operational strategies.

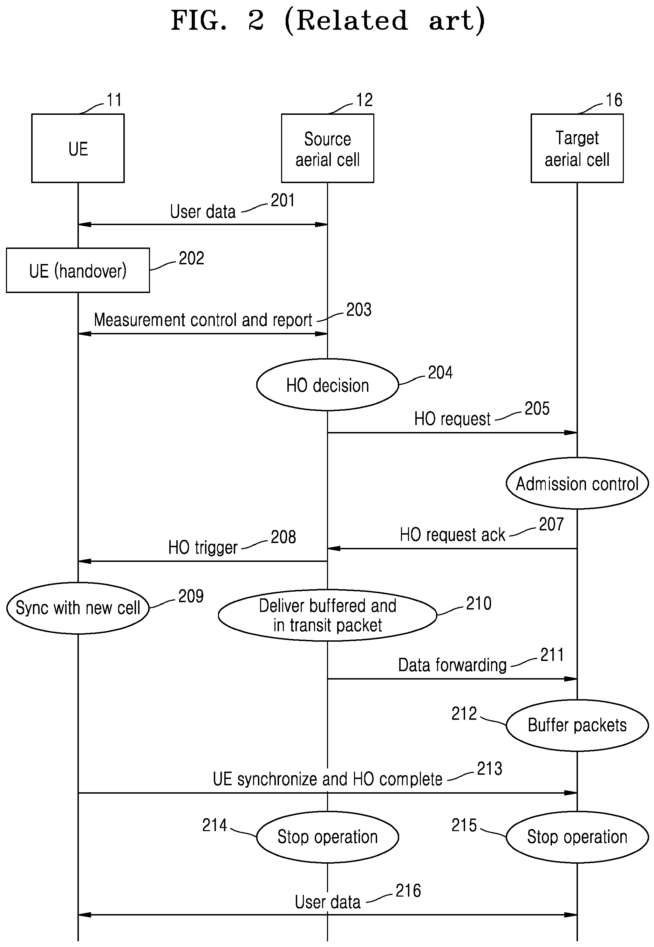

During a replacement event of the LAP-based aerial cell, ensuring seamless transitions of ongoing data sessions for all connected users (e.g., UEs) from a source LAP-based aerial cell to a target LAP-based aerial cell without interruptions remains crucial. Related art methodologies for the replacement event are described in conjunction with **FIGS. 2 to 4.** Related art protocols governing user handover and link management between the source and target LAPs exhibit latency issues due to signaling overhead, which significantly degrades user data throughput during the replacement process. For example, protocols such as the handover of UE context from a current (or an existing) LAP (e.g., source LAP-based aerial cell) to a new LAP (e.g., a target LAP-based aerial cell), as well as aerial link management, can incur latencies on the order of several seconds, particularly as these protocols scale with the number of concurrent users.

Recent advancements, particularly in related art methodologies like Aerial Cell Cloning (ACC), have reduced replacement latency to mere milliseconds. The ACC introduces a novel protocol for replicating the source LAP-based aerial cell at the same geographical location as the target LAP-based aerial cell, thereby maintaining uplink and downlink synchronization with the connected UE(s) **11** and a terrestrial cell. This approach facilitates rapid session transfers, as the process involves transferring only the context container between LAPs. However, the size of this container depends on a number of users, and as such, the time and energy (e.g., resource) required for compressing, transferring, and decompressing the container increase proportionally with user load. While ACC proposes a more efficient protocol by transferring link and location parameters from the source to the target LAPs, efficiency remains inversely proportional to the number of user contexts. Thus, as the number of users increases, both latency and energy consumption during replacement experience adverse effects. Distinct latency and energy consumption characteristics exist for each session transfer protocol within the network. Related art methodologies often overlook comprehensive analyses of these processes, typically employing a singular protocol during replacement without adequately assessing implications on network latency or energy efficiency.

Moreover, related art methodologies have not independently evaluated replacement triggers or user data traffic requirements to optimize the selection of session transfer protocols for each UE **11,** thereby failing to meet the network's latency and energy efficiency targets. In scenarios where immediate replacement proves critical such as low battery conditions or equipment malfunctions, real-time responses become essential. Conversely, replacements necessitated by capacity changes can be managed in a non-real-time manner for certain users. Users with high bandwidth demands anticipate minimal session interruption times, and predicting battery levels and capacity fluctuations proves more feasible than addressing unexpected malfunctions. Users requiring Ultra-Reliable Low-Latency Communications (URLLC) should expect uninterrupted service during replacement events.

Additionally, related art methodologies such as a Dual Active Protocol Stack (DAPS) handover apply to the terrestrial cell(s). The DAPS handover mechanism allows the UE to maintain two downlink links upon receiving the handover command via the Radio Resource Control (RRC) message one link with a source cell and another with a target cell. The source cell forwards protocol data units (PDUs) to the target cell, which subsequently transmits the PDUs to the UE. Concurrently, the UE initiates uplink synchronization with the target cell through a random-access procedure. Upon completion of the Random-Access Channel (RACH) procedure, the UE transitions uplink data transmission to the target cell, after which the source cell link is released. By maintaining the source cell radio link (including data flow) while establishing the target cell radio link, DAPS effectively minimizes interruption during handover to nearly zero.

However, the related art DAPS handover remains unsuitable for non-terrestrial cells. For example, the DAPS handover, in its original format, does not translate effectively to aerial cells during replacement due to potential overload on a backhaul link between the target aerial cell (e.g., target LAP-based aerial cell) and the source aerial cell (e.g., source LAP-based aerial cell), which may struggle to accommodate the packet forwarding demands for all UEs within the network. Thus, the DAPS handover does not apply to aerial cell replacement scenarios because of the significant packet forwarding overhead involved.

Thus, it is desired to address the above-mentioned disadvantages or other shortcomings or at least provide a useful alternative for adaptive aerial cell replacement mechanisms for efficient operation in wireless communication systems.

SUMMARY

According to an aspect of the disclosure, there is provided a method performing by a source aerial cell, the method including: determining one or more network parameters associated with the source aerial cell and at least one of a plurality of User Equipments (UEs) connected with the source aerial cell; selecting one or more UEs from the plurality of UEs that require handover from the source aerial cell to a target aerial cell based on the one or more network parameters; transmitting a handover request to the target aerial cell for the one or more selected UEs; receiving an acknowledgment of the transmitted handover request from the target aerial cell; transmitting a notification message to the one or more selected UEs for performing the handover by utilizing a Dual Active Protocol Stack (DAPS); receiving, after transmitting the notification message, one or more data packets from the one or more selected UEs; obtaining aggregated data packets by aggregating the one or more data packets associated with the one or more selected UEs; compressing the aggregated data packets into a compressed payload; and transmitting the compressed payload to the target aerial cell, to facilitate seamless transitions between the source aerial cell and the target aerial cell.

According to another aspect of the disclosure, there is provided a method including: receiving an aerial cell replacement trigger message from a source aerial cell, initiating, upon receiving the aerial cell replacement trigger message, a replacement process for the source aerial cell; determining one or more network parameters associated with the source aerial cell and at least one of a plurality of User Equipments (UEs) connected with the source aerial cell during the initiation of the replacement process; selecting an optimal protocol for data session transfer for each of the plurality of UEs during the initiation of the replacement process based on at least one the aerial cell replacement trigger message and the one or more network parameters; and performing at least one action based on the selected optimal protocol for data session transfer.

According to another aspect of the disclosure, there is provided an electronic device including: a memory; a processor; a communicator; and a data controller, operably connected to the memory, the processor, and the communicator, the data controller configured to: determine one or more network parameters associated with a source aerial cell and at least one of a plurality of User Equipments (UEs) connected with the source aerial cell; select one or more UEs from the plurality of UEs that require handover from the source aerial cell to a target aerial cell based on the one or more network parameters; transmit a handover request to the target aerial cell for the one or more selected UEs; receive an acknowledgment of the transmitted handover request from the target aerial cell; transmit a notification message to the one or more selected UEs for performing the handover by utilizing a Dual Active Protocol Stack (DAPS); receive, after transmitting the notification message, one or more data packets from the one or more selected UEs; obtain aggregated data packets by aggregating one or more data packets associated with the one or more selected UEs; compress the aggregated data packets into a compressed payload; and transmit the compressed payload to the target aerial cell, to facilitate seamless transitions between the source aerial cell and the target aerial cell.

To further clarify the advantages and features of the disclosure, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail in the accompanying drawings.

At least some of the above and other features of the invention are set out in the claims.

BRIEF DESCRIPTION OF DRAWINGS

These and other features, aspects, and advantages of the embodiments of the disclosure will become better understood when the following detailed description is read with reference to the accompanying drawings in which like characters represent like parts throughout the drawings, wherein:

**FIGS. 1A, 1B and 1C** illustrate various deployment scenarios and an example problem scenario associated with Low Altitude Platform (LAP), according to related art;
**FIG. 2** is a sequence flow diagram illustrating a plurality of operations associated with a UE handover method, according to related art;
**FIG. 3** is a sequence flow diagram illustrating a plurality of operations associated with an aerial link management method, according to related art;
**FIG. 4** is a sequence flow diagram illustrating a plurality of operations associated with an aerial cell cloning protocol, according to related art;
**FIG. 5** illustrates a block diagram of an electronic device for adaptive aerial cell replacement mechanisms, according to an embodiment of the disclosure;
**FIG. 6** is a sequence flow diagram illustrating a plurality of operations associated with an Aerial Dual Active Protocol Stack (ADAPS) handover method, according to an embodiment of the disclosure;
**FIG. 7** is a flow diagram illustrating a method for performing the ADAPS handover, according to an embodiment of the disclosure;
**FIG. 8** illustrates a plurality of operations associated with an adaptive Aerial Cell Replacement (ACeR) method, according to an embodiment of the disclosure; and
**FIG. 9** is a flow diagram illustrating a method for performing the ACeR, according to an embodiment of the disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the embodiments of the disclosure. Furthermore, in terms of the construction of the device, one or more components of the device may have been represented in the drawings by related art symbols, and the drawings may show only those specific details that are pertinent to understanding the embodiments of the disclosure so as not to obscure the drawings with details that will be readily apparent to those of ordinary skill in the art having the benefit of the description herein.

DETAILED DESCRIPTION

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in one embodiment", "in another embodiment", and similar language throughout this specification may, but do not necessarily, all refer to the same embodiment.

The terms "comprise", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks that carry out a described function or functions. These blocks, which may be referred to herein as units or modules or the like, are physically implemented by analog or digital circuits such as logic gates, integrated circuits, microprocessors, microcontrollers, memory circuits, passive electronic components, active electronic components, optical components, hardwired circuits, or the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the invention. Likewise, the blocks of the embodiments may be physically combined into more complex blocks without departing from the scope of the invention.

The accompanying drawings are used to help easily understand various technical features and it should be understood that the embodiments presented herein are not limited by the accompanying drawings. As such, the disclosure should be construed to extend to any alterations, equivalents, and substitutes in addition to those which are particularly set out in the accompanying drawings. Although the terms first, second, etc. may be used herein to describe various elements, these elements should not be limited by these terms. These terms are generally only used to distinguish one element from another.

In the wireless communication systems, aerial communication facilitates connectivity for users both on a ground and in an air through Local Aerial Platforms (LAPs), also known as uncrewed aerial NodeB (UxNB) as defined by 3GPP. This is achieved via a standalone link (next generation NodeB (gNB) or relay node (RN)) or an augmented link (carrier aggregation (CA) or dual connectivity (DC)). In this architecture, a terrestrial cell functions as an anchor or Master Cell Group (MCG), while an aerial cell provides a Secondary Cell Group (SCG) to User Equipment (UEs), as illustrated in **FIGS. 1A and 1B. FIGS. 1A, 1B and 1C** illustrate various deployment scenarios and an example problem scenario associated with LAPs, according to related art. In the standalone deployment of UxNB **10,** a User Equipment (UE) **11** establishes a connection with a drone cell **12,** referred to as an aerial cell, through an air interface. The drone cell **12,** in turn, is linked to a terrestrial cell **13** and a core network **14** via a backhaul interface. This configuration allows for seamless communication between the UE **11** and the network, leveraging the drone cell's aerial capabilities. In the augmented deployment of UxNB **20,** UE **11** maintains a connection with the drone cell **12** (aerial cell) via an air interface while simultaneously being connected to the terrestrial cell **13** through another air interface. The drone cell **12** is also interconnected with the terrestrial cell **13** and the core network **14** through the backhaul interface. This dual connection enhances the network's resilience and flexibility, allowing the UE **11** to benefit from both aerial and terrestrial network resources.

In the augmented deployment scenario **30,** consider a situation where the drone cell **12** (source aerial cell) experiences a battery failure. In related art methodologies, for instance, an aerial cell fleet manager **15** detects the battery depletion and initiates a protocol to substitute the source aerial cell **12** with a new drone cell **16** (target aerial cell) that possesses full battery capacity, without considering other network-related parameters (e.g., requirement of user, capacity, etc.). In other words, due to the inherent limitations of drone technology, including battery life, payload capacity, and susceptibility to mechanical failures, these aerial cells require regular and timely replacements. These limitations collectively highlight the challenges in maintaining a reliable and efficient operation of LAP-based aerial cells, there is a need for improved strategies to manage replacements and ensure continuous service delivery.

In addition, one or more network operators may select either deployment strategy based on their coverage or capacity requirements. The standalone deployments are primarily advantageous for extending coverage, whereas augmented deployments are more effective for enhancing capacity. A prevalent challenge associated with aerial cells is their replacement. This process involves the transition of user sessions from a legacy LAP to a new LAP.

For the standalone deployments, a handover-based LAP replacement protocol is employed, as illustrated in **FIG. 2. FIG. 2** is a sequence flow diagram illustrating a plurality of operations associated with a UE handover method, according to related art.

In the UE handover method, at operation **201,** the UE **11** established a connection with the source aerial cell **12.** During this initial phase, the UE **11** engages in data transmission and reception with the source aerial cell **12,** facilitating seamless communication. At operations **202-203,** the UE **11** continuously measures the signal quality and strength of both the source aerial cell **12** and neighboring cells, which are potential target aerial cells **16.** During this measurement phase, the source aerial cell **12** configures the UE **11** to perform specific measurements and generate reports based on predefined events or conditions that impact network performance.

Following these measurements, the UE **11** transmits the collected measurement reports back to the source aerial cell **12.** This transmission marks a pivotal moment in the handover process, at operations **204-205,** as the source aerial cell **12** evaluates the reports against established criteria and prevailing network conditions to determine the necessity of a handover. In an example case in which the evaluation indicates that a handover is warranted, the source aerial cell **12** initiates the next phase by sending a Hand-Over (HO) request to the target aerial cell **16.**

Upon receiving the HO request, at operation **206,** the target aerial cell **16** conducts an admission control operation to assess its capacity to accommodate the UE **11.** At operation **207,** once this assessment is completed, the target aerial cell **16** responds by transmitting a handover request acknowledgment back to the source aerial cell **12,** confirming its readiness to proceed with the handover.

At operation **208,** the source aerial cell **12** issues a handover trigger command to the UE **11,** prompting it to prepare for the transition. At operation **209,** the UE **11** then synchronizes with the target aerial cell **16,** ensuring that it is aligned with the new connection point (target aerial cell **16**). At operation **210,** concurrently, the source aerial cell **12** manages the delivery of any buffered and in-transit packets, ensuring that no data is lost during the transition. At operations **211-212,** subsequently, the source aerial cell **12** forwards the necessary data to the target aerial cell **16,** which buffers these packets in preparation for the UE's connection.

At operations **213-214,** once the UE **11** successfully synchronizes and completes the handover with the target aerial cell **16,** the source aerial cell **12** ceases all operations associated with the UE **11,** effectively releasing the connection. In contrast, the target aerial cell **16** initiates operations related to the UE **11,** establishing a new communication link. At operations **215-216,** user data is transferred seamlessly between the target aerial cell **16** and the UE **11,** completing the handover process and ensuring uninterrupted service for the user. This protocol illustrated in FIG. 2 includes a random access phase for uplink synchronization with the target LAP for each UE, which can lead to increased latency due to preamble collisions and retransmissions as user density rises.

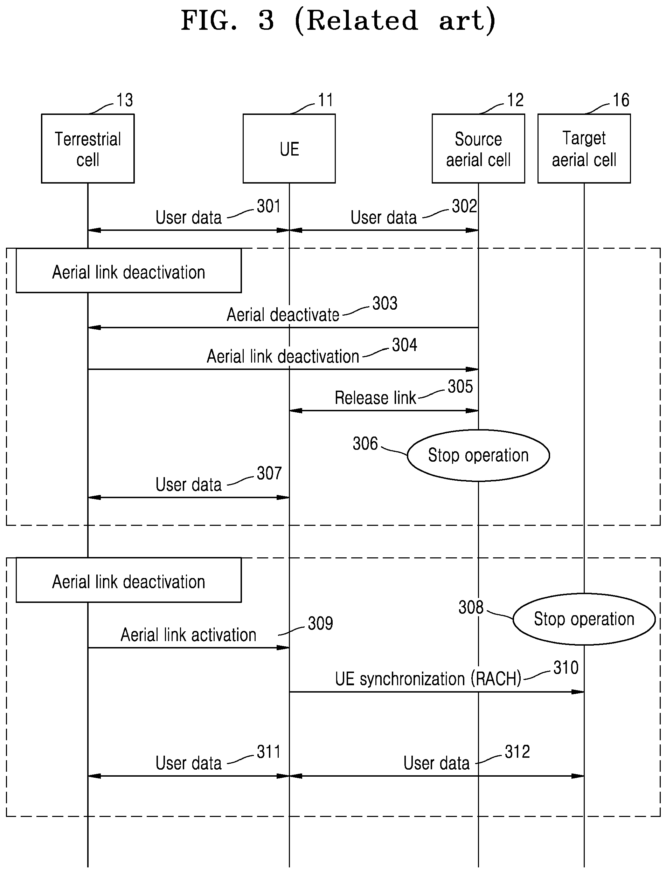

Conversely, a link management-based LAP replacement protocol is specific to augmented deployments, as illustrated in **FIG. 3. FIG. 3** is a sequence flow diagram illustrating a plurality of operations associated with an aerial link management method, according to related art.

At operations **301-302,** initially, the UE **11** establishes simultaneous connections with both the source aerial cell **12** and the terrestrial cell **13.** This foundational phase enables the UE **11** to engage in bidirectional data transmission and reception. The seamless communication established during this step is needed for ensuring uninterrupted service and maintaining the integrity of the user experience. At operation **303,** in the context of aerial link deactivation, the process begins with the source aerial cell **12** transmitting an aerial deactivation command to the terrestrial cell **13.** This command serves as a trigger for the subsequent actions required to deactivate the aerial link. At operation **304,** following the receipt of the deactivation command, the terrestrial cell **13** initiates the deactivation of the aerial link associated with the source aerial cell **12.** This action signifies the transition of the communication framework from an aerial to a terrestrial focus. At operations **305-306,** the source aerial cell **12** proceeds to release the aerial link associated with the UE **11** and ceases all operations related to the UE **11.** This step is crucial as it ensures that the aerial link is fully disengaged, allowing for a clear delineation between aerial and terrestrial communication modalities. At operation **307,** the UE **11** is left with an active connection solely to the terrestrial cell **13** for the transmission and reception of user data. This transition underscores the reliance on terrestrial infrastructure following aerial link deactivation.

At operation **308,** the method then shifts to aerial link activation, where the target aerial cell **16** initiates its operational capabilities. This activation is pivotal for reestablishing aerial connectivity. At operation **309,** the terrestrial cell **13** communicates an aerial activation message to the UE **11.** This command is for signaling the UE **11** to prepare for reengagement with aerial resources. At operation **310,** subsequent to receiving the activation command, the UE **11** performs synchronization with the target aerial cell **16** through a Random Access Channel (RACH). During this synchronization process the UE's operational parameters are aligned with the operational parameters of the target aerial cell **16.** At operations **311-312,** the user data is transferred seamlessly between the target aerial cell **16** and the UE **11,** as well as between the UE **11** and the terrestrial cell **13.** This dual transfer mechanism is vital for maintaining a continuous flow of information and ensuring that user experience remains uninterrupted throughout the transition from one aerial link to another. In this scenario illustrated in FIG. 3, the anchor link (MCG) is maintained with the terrestrial cell **13,** while the SCG link with the source LAP (e.g., source aerial cell **12**) is deactivated and subsequently activated with the target LAP (e.g., target aerial cell **16)** for each UE. While the link activation process is generally faster than the handover procedure, it may experience delays due to the absence of user control, being contingent upon the data traffic load for the UE in both Uplink (UL) and Downlink (DL) directions.

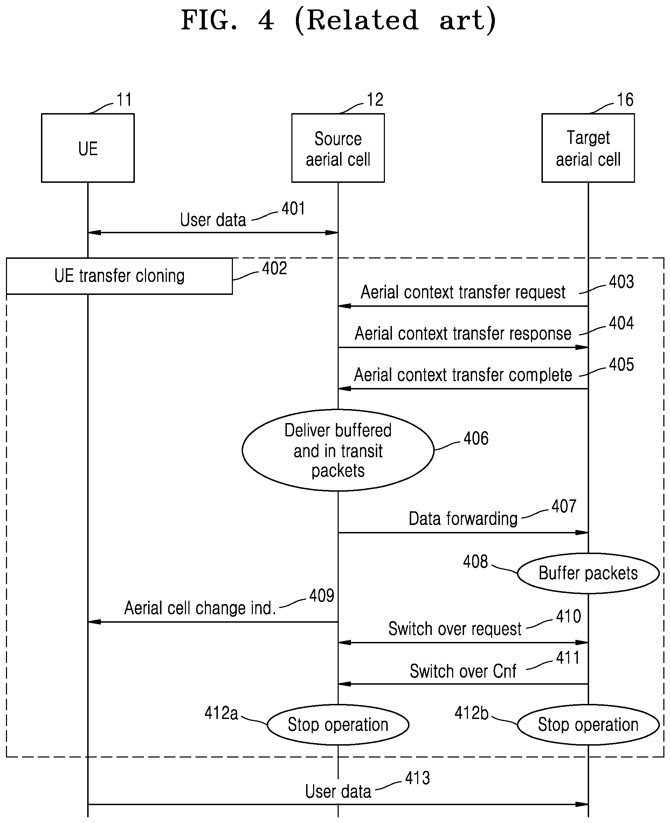

**FIG. 4** is a sequence flow diagram illustrating a plurality of operations associated with an aerial cell cloning protocol, according to related art.

At operation **401,** initially, the UE **11** established a connection with the source aerial cell **12.** This connection enables the UE **11** to engage in data transmission and reception, thereby facilitating seamless communication with the source aerial cell **12.** At operations **402-403,** the UE **11** initiates the transfer cloning process, during which the target aerial cell **16** sends an aerial context transfer request to the source aerial cell **12.** This request signifies the intent of the target aerial cell **16** to acquire the necessary context information to manage the ongoing session effectively.

At operation **404,** the source aerial cell **12** responds by transmitting an aerial context transfer response back to the target aerial cell **16.** This response contains vital context information that enables the target aerial cell **16** to prepare for the impending data transfer. Subsequently, at operation **405,** the target aerial cell **16** acknowledges the successful receipt of this information by sending an aerial context transfer complete message to the source aerial cell **12,** indicating that it is ready to proceed with the transfer.

At operation **406,** the source aerial cell **12** executes operations related to the delivery of buffered and in-transit packets, ensuring that no data is lost during the transition. Following this, at operation **407,** the source aerial cell **12** forwards the relevant data packets to the target aerial cell **16,** facilitating the transfer of ongoing communications. At operation **408,** Once the target aerial cell **16** receives this data, buffering the packets to manage the incoming data stream efficiently.

At operation **409,** the source aerial cell **12** communicates an aerial cell change indication to the UE **11,** signaling the impending switch to the target aerial cell **16.** At operation **410,** the source aerial cell **12** sends a switchover request to the target aerial cell **16,** formally initiating the handover process. At operation **411,** the target aerial cell **16** confirms this request by transmitting a switch-over confirmed message back to the source aerial cell **12,** indicating that it is prepared to take over the UE's session.

With the confirmation in place, at operation **412a,** the source aerial cell **12** ceases all operations associated with the UE **11,** effectively releasing its resources. Concurrently, at operation **412b,** the target aerial cell **16** initiates all operations related to the UE **11,** thus assuming control of the communication session. Finally, at operation **413,** user data transfer resumes between the UE **11** and the target aerial cell **16,** completing the transition and ensuring continuous service without interruption.

As illustrated in **FIG. 4,** an Aerial Cell Cloning (ACC) session transfer mechanism transmits Air-to-Ground (A2G) link parameters for all users, along with Air-to-Terrestrial (A2T) link parameters from the source LAP (e.g., source aerial cell **12)** to the target LAP (e.g., target aerial cell **16). **The ACC mechanism applies to both standalone and augmented deployment scenarios. The target LAP is capable of delivering services from the same geographic location as the source LAP, thereby eliminating the need for a synchronization step and minimizing latency. However, this latency is influenced by the size of the data container, which is directly proportional to the number of users.

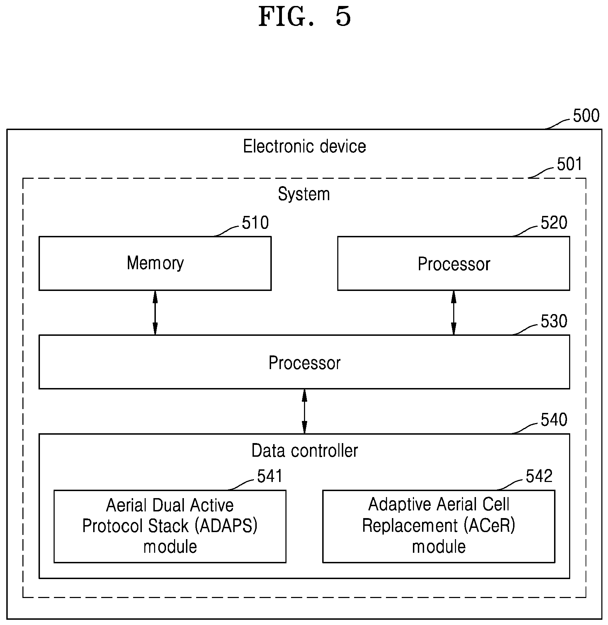

One or more embodiments of the disclosure may address the above-mentioned challenges by providing a unique strategy for adaptive aerial cell replacement mechanisms for efficient operation in wireless communication systems, as described in conjunction with **FIG. 5** to **FIG. 9.**

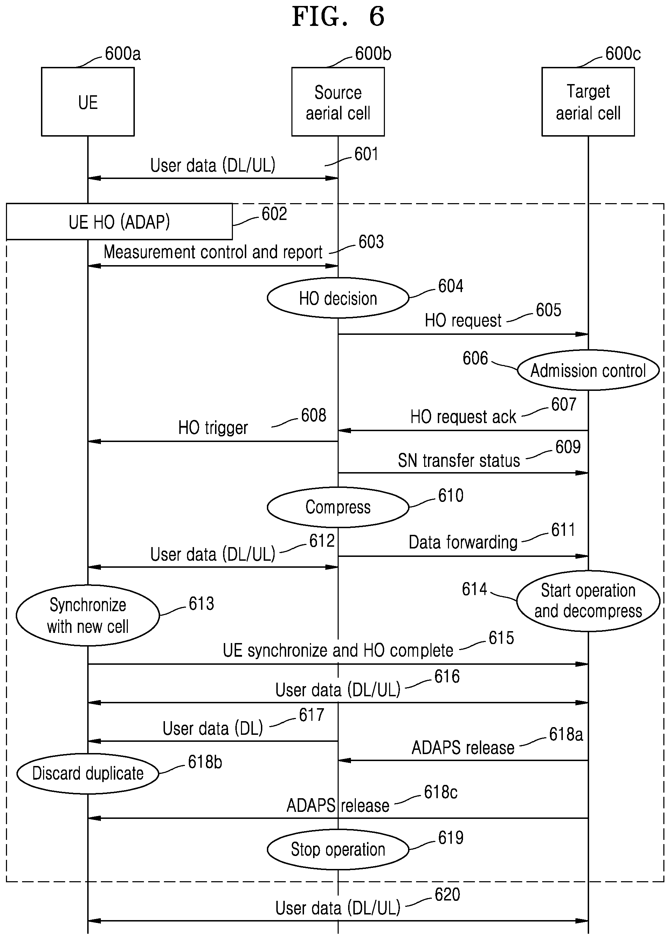

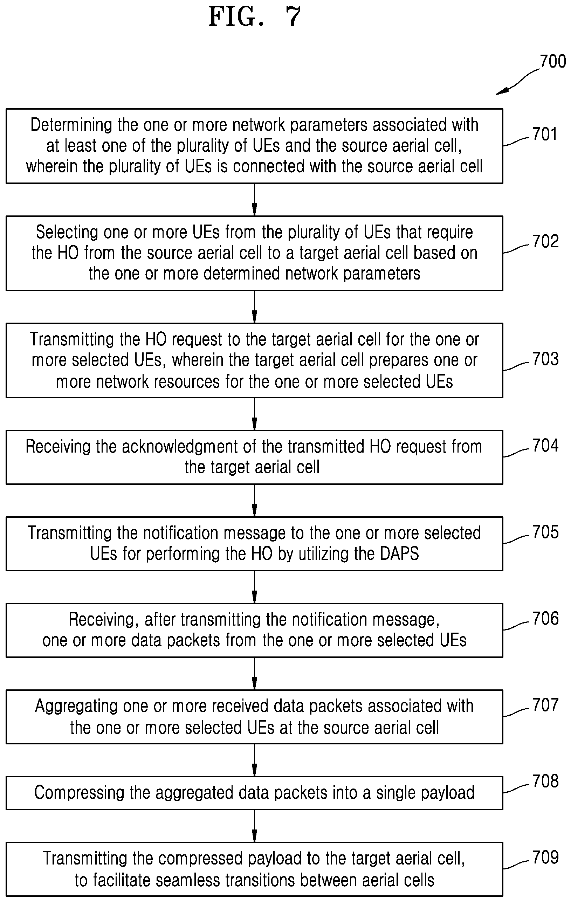

FIGS. 6 and 7, in conjunction with FIG. 5, illustrate a method which includes an Aerial Dual Active Protocol Stack (ADAPS) handover mechanism for aerial cell replacement, for example, designed for Ultra-Reliable Low-Latency Communication (URLLC) scenarios, according to one or more embodiments. In the ADAPS framework, a source aerial cell compresses and transmits all downlink packets for all connected UEs to a target aerial cell. The target aerial cell then decompresses the payload and forwards the decompressed packets to each connected UE individually. This dual-active protocol stack enables seamless handover to the target cell with zero interruption time, as it concurrently manages the downlink connection with the source aerial cell.

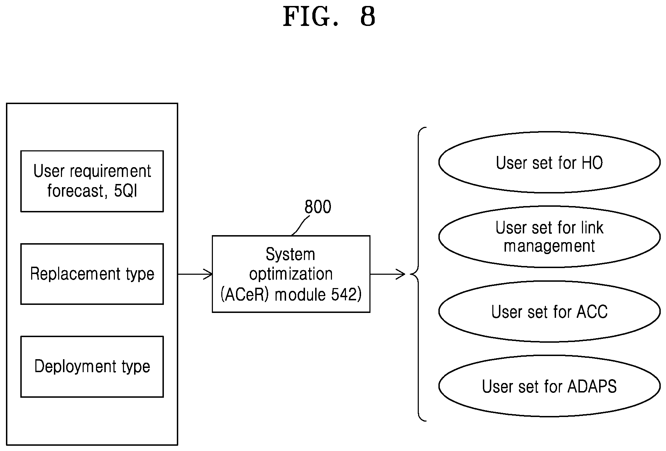

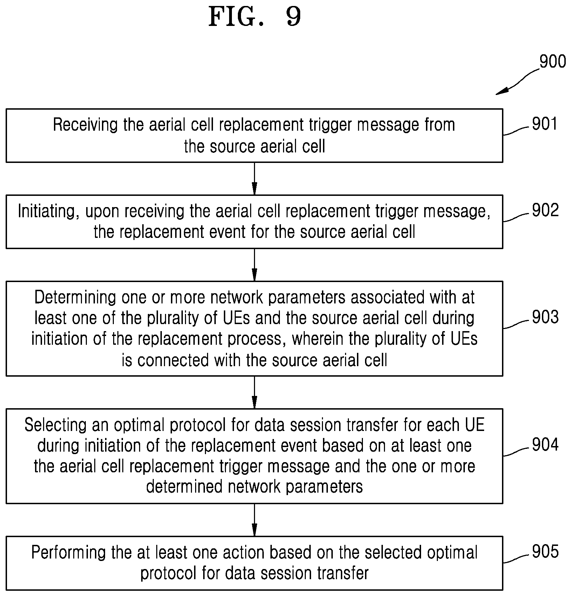

FIGS. 8 and 9, in conjunction with FIG. 5, illustrate a method, which includes an Adaptive Aerial Cell Replacement (ACeR) mechanism, which facilitates the network's selection of an optimal session transfer protocol for each user according to one or more embodiments. For example, the selection may be based on predicted data traffic patterns and triggers for replacement, ensuring energy efficiency and minimizing latency within the network.

**FIG. 5** illustrates a block diagram of an electronic device **500** according to an embodiment of the disclosure. Examples of the electronic device **500** include, but are not limited to, a source aerial cell, a target aerial cell, any network node, etc. According to an embodiment, the electronic device **500** may be for facilitating an adaptive aerial cell replacement mechanism.

In one or more embodiments, the electronic device **500** may include a system **501.** The system **501** may include a memory **510,** a processor **520,** a communicator **530,** and a data controller **540.** In one or more embodiments, the system **501** may be implemented on one or multiple electronic devices (not shown in FIG. 5).

In one or more embodiments, the memory **510** stores instructions to be executed by the processor **520** for adaptive aerial cell replacement mechanisms for efficient operation in wireless communication systems, as discussed throughout the disclosure. The memory 510 may include non-volatile storage elements. Examples of such non-volatile storage elements may include magnetic hard discs, optical discs, floppy discs, flash memories, or forms of Electrically Programmable Memories (EPROM) or Electrically Erasable and Programmable (EEPROM) memories. In addition, the memory **510** may, in some examples, be considered a non-transitory storage medium. The term "non-transitory" may indicate that the storage medium is not embodied in a carrier wave or a propagated signal. However, the term "non-transitory" should not be interpreted that the memory **510** is non-movable. In certain examples, a non-transitory storage medium may store data that can, over time, change (e.g., in Random Access Memory (RAM) or cache). The memory **510** can be an internal storage unit, or it can be an external storage unit of the electronic device **500,** a cloud storage, or any other type of external storage.

In one or more embodiments, the processor **520** communicates with the memory **510,** the communicator **530,** the display (140), the camera (150), and the image processing engine (160). The processor **520** is configured to execute instructions stored in the memory **510** and to perform various processes for adaptive aerial cell replacement mechanisms for efficient operation in wireless communication systems, as discussed throughout the disclosure. The processor **520** may include one or a plurality of processors, maybe a general-purpose processor, such as a Central Processing Unit (CPU), an Application Processor (AP), or the like, a graphics-only processing unit such as a Graphics Processing Unit (GPU), a Visual Processing Unit (VPU), and/or an Artificial intelligence (AI) dedicated processor such as a Neural Processing Unit (NPU).

In one or more embodiments, the communicator **530** is configured for communicating internally between internal hardware components and with external devices (e.g., server) via one or more networks (e.g., radio technology). The communicator **530** includes an electronic circuit specific to a standard that enables wired or wireless communication. For instance, the communicator 530 may comprise a wireless interface.

In one or more embodiments, the data controller **540** is implemented by processing circuitry such as logic gates, integrated circuits, microprocessors, microcontrollers, memory circuits, passive electronic components, active electronic components, optical components, hardwired circuits, or the like, and may optionally be driven by firmware. The circuits may, for example, be embodied in one or more semiconductor chips, or on substrate supports such as printed circuit boards and the like.

In one or more embodiments, the data controller **540** may include an Aerial Dual Active Protocol Stack (ADAPS) module **541** and an ACeR module **542.**

In one or more embodiments, the ADAPS module **541** may perform multiple operations for adaptive aerial cell replacement mechanisms for efficient operation in wireless communication systems, which are mentioned below.

In one or more embodiments, the ADAPS module **541** may be configured to establish a connection with a plurality of UEs. The plurality of UEs transmits the one or more data packets to a source aerial cell via the established connection or receives the one or more data packets from the source aerial cell via the established connection. Upon establishing the connection, the ADAPS module **541** is configured to determine one or more network parameters associated with at least one of the plurality of UEs and the source aerial cell. Examples of the one or more network parameters may include, but are not limited to, one or more measurement reports received from each UE, a type of network deployment, a type of replacement trigger, a type of user requirement, and response time information.

In one or more embodiments, the ADAPS module **541** is configured to analyze the data traffic of each UE among the plurality of UEs. Each UE transmits the one or more data packets to the source aerial cell or receives the one or more data packets from the source aerial cell. The ADAPS module **541** may be further configured to categorize, by at least one Machine Learning (ML) model, the one or more UEs based on a result of traffic analysis, to determine whether a requirement of the HO from the source aerial cell to the target aerial cell. The ADAPS module **541** may be further configured to select, based on the categorization, the one or more UEs from the plurality of UEs that require a HO from the source aerial cell to the target aerial cell.

For instance, consider a scenario associated with a city where multiple users (UEs) access an internet through aerial cells, such as drones or balloons providing network coverage, the ADAPS module **541** may be implemented to monitor the data traffic of each mobile device. For example, the ADAPS module **541** may collect information on the amount of data each device sends and receives. By utilizing the ML model, the ADAPS module **541** categorizes UEs based on their usage patterns. For example, ADAPS module **541** may classify the UEs into groups like "high data users", "moderate data users", and "low data users". However, the disclosure is not limited thereto, and as such, the UEs may be classified based on one or more other criteria. The ADAPS module **541** then assesses whether any UEs need to switch (hand over) from their current aerial cell to a nearby one, depending on the analysis of data traffic and the categorized UEs.

In one or more embodiments, the ADAPS module **541** may be configured to transmit a Hand Over (HO) request to the target aerial cell for the one or more selected UEs, where the target aerial cell prepares one or more network resources for the one or more selected UEs. The HO request may include one or more UE contexts associated with one or more selected UEs and the one or more UE contexts may include, but is not limited to, an identifier, Quality of Service (QoS) requirement information, and a type of network resource requirement information. The ADAPS module **541** may be further configured to receive an acknowledgment of the transmitted HO request from the target aerial cell. The ADAPS module **541** may be further configured to transmit a notification message to the one or more selected UEs for performing the HO by utilizing a Dual Active Protocol Stack (DAPS). The notification message may include, for example, but is not limited to, Radio Resource Control (RRC) connection reconfiguration information.

In one or more embodiments, after transmitting the notification message, the ADAPS module **541** may be configured to receive one or more data packets from the one or more selected UEs. The ADAPS module **541** may be further configured to aggregate one or more received data packets associated with the one or more selected UEs at the source aerial cell. The ADAPS module **541** may be further configured to compress the aggregated data packets into a single payload. However, the disclosure is not limited thereto, and as such, the ADAPS module **541** may be configured to compress the aggregated data packets into a compressed payload. For example, the compressed payload may include one or more payloads. The ADAPS module **541** may be further configured to transmit the compressed payload to the target aerial cell, to facilitate seamless transitions between aerial cells (e.g., between the source aerial cell and the target aerial cell), as described in conjunction with **FIG. 6** and **FIG. 7**.

In one or more embodiments, the compressed payload is transmitted over a predefined network interface, the predefined network interface may include at least one of an Xn interface and a Point-to-Point (P2P) interface. An Xn interface may be a logical interface that enables communication between next-generation NodeBs (gNBs), including terrestrial, aerial, and future 6G nodes. It may support both control and user plane functions to facilitate mobility, data forwarding, and coordination across heterogeneous radio access nodes. The interface may also support interworking with legacy LTE nodes and uncrewed aerial base stations. A P2P interface is a direct communication link between two network nodes. A P2P may be implemented as a dedicated physical or logical connection without intermediate routing. Unlike the Xn interface, which is a logical, multi-node interface designed for coordination and mobility across distributed radio access nodes, a point-to-point interface is limited to direct, pairwise communication.

In one or more embodiments, the ADAPS module **541** may be configured to receive a confirmation message from the target aerial cell. The confirmation message indicates that the one or more selected UEs have successfully synchronized with the target aerial cell. Upon receiving the confirmation message, the ADAPS module **541** may be configured to discard one or more operations associated with the one or more received data packets and release one or more network resources associated with the one or more selected UEs.

In one or more embodiments, the ADAPS module **541** may be configured to receive a notification message from the target aerial cell. The notification message instructs the source aerial cell to cease transmission of the compressed data packets to the target aerial cell.

In one or more embodiments, the ACeR module **542** may perform multiple operations for adaptive aerial cell replacement mechanisms for efficient operation in wireless communication systems, which are mentioned below.

In one or more embodiments, the ACeR module **542** may be configured to receive an aerial cell replacement trigger message from the source aerial cell. The aerial cell replacement trigger message indicates a type of replacement trigger for the source aerial cell and where the type of replacement trigger may include, for example, but is not limited to, a low-power trigger, a capacity reconfiguration trigger, and a malfunction trigger. The ACeR module **542** is further configured to determine the one or more network parameters associated with at least one of a plurality of UEs and the source aerial cell during the initiation of the replacement process. The ACeR module **542** is further configured to select an optimal protocol for data session transfer for each UE during initiation of the replacement event based on at least one of the aerial cell replacement trigger message and the one or more determined network parameters, as described in conjunction with **FIG. 8**. The ACeR module **542** is further configured to perform at least one action based on the selected optimal protocol for data session transfer. The at least one action may include, for example, but is not limited to, a Hand Over (HO) action, a link management action, an Aerial Cell Cloning (ACC) action, and an aerial Dual Active Protocol Stack (ADAPS) action.

In one or more embodiments, the low power trigger indicates that the source aerial cell is operating at a power level insufficient to provide one or more network services to the plurality of UEs, leading to the replacement of the source aerial cell with the target aerial cell.

For instance, consider a scenario where the source aerial cell in a rural area is designed to support 4G services. Due to extreme weather conditions, the source aerial cell's power output drops significantly. As a result, users (UEs) in the area experience dropped calls and slow internet speeds. The ACeR module **542** detects that the tower (source aerial cell) is operating at a power level insufficient to provide reliable services. Consequently, the ACeR module **542** automatically switches users to a nearby tower (target aerial cell) that has a stable power supply, ensuring continuous connectivity. While the term "tower" may be used herein, it will be appreciated that this refers to a base station, which may be an aerial cell, such as a source aerial cell or target aerial cell.

In one or more embodiments, the capacity reconfiguration trigger indicates that the source aerial cell is unable to provide one or more network services to the plurality of UEs due to insufficient capacity to handle the plurality of UEs, leading to the replacement of the source aerial cell with the target aerial cell that has a higher capacity to accommodate the plurality of UEs.

For instance, consider a scenario associated with a busy urban environment where the source aerial cell is handling a large number of users (UEs) during a major event, like a concert. The source aerial cell becomes overloaded, causing network congestion and service interruptions. The ACeR module **542** recognizes that the source aerial cell cannot handle the volume of traffic due to insufficient capacity. To resolve this, the ACeR module **542** redirects users to a nearby target aerial cell with higher capacity, ensuring that everyone can access the network without issues.

In one or more embodiments, the capacity reconfiguration trigger indicates that the source aerial cell is either ideally utilized or underutilized, leading to the replacement of the source aerial cell with the target aerial cell.

For instance, consider a scenario associated with a suburban area, the source aerial cell is either perfectly balanced in its user load (ideally utilized) or has fewer users than it can handle (underutilized). The network analytics show that this tower (source aerial cell) is not being used to its full potential. To optimize network performance, the ACeR module **542** decides to replace the source aerial cell with a more strategically located tower (target aerial cell) that can better serve the current user distribution, enhancing overall service quality.

In one or more embodiments, the malfunction trigger indicates that the source aerial cell is experiencing at least one of a mechanical failure or a software malfunction, leading to the replacement of the source aerial cell with the target aerial cell.

For instance, consider a scenario where the source aerial cell experiences a severe storm, leading to mechanical damage to its antennas. Additionally, a software glitch causes the tower (source aerial cell) to malfunction intermittently. The users (UEs) report service disruptions and dropped connections. The ACeR module **542** detects these issues through performance monitoring and identifies that the source aerial cell is experiencing a malfunction. To maintain service quality, the ACeR module **542** automatically switches (handover) users to a functional tower (target aerial cell).

In one or more embodiments, the ACeR module **542** may be configured to perform one or more operations for the ADAPS action, the detailed description related to the ADAPS action is covered in the description related to the ADAPS module **541,** and is omitted herein for the sake of brevity.

Although **FIG. 5** shows various hardware components of the electronic device **500,** it is to be understood that other embodiments are not limited thereon. In other embodiments, the electronic device **500** may include fewer or more components. Further, the labels or names of the components are used only for illustrative purposes and do not limit the scope of the invention. One or more components can be combined to perform the same or substantially similar functions for the adaptive aerial cell replacement mechanisms for efficient operation in wireless communication systems.

**FIG. 6 is** a sequence flow diagram illustrating a plurality of operations associated with an ADAPS handover method, according to an embodiment of the disclosure. The ADAPS handover method may include one or more network entities, for example, a UE or a plurality of UEs **600a,** a source aerial cell **600b,** and a target aerial cell **600c.** In one embodiment, the source aerial cell **600b** may relate to the electronic device **500.**

According to an embodiment, the ADAPS handover method may include, at operation **601,** establishing a connection between the UE **600a** and the source aerial cell **600b.** For example, the UE **600a** may establish a connection with the source aerial cell **600b.** During this initial phase, the UE **600a** may engage in data transmission and reception with the source aerial cell **600b,** facilitating seamless communication. At operations **602-603,** the UE **600a** continuously measures the signal quality and strength of both the source aerial cell **600b** and neighboring cells, each of which is a potential target aerial cell **600c.** During this measurement phase, the source aerial cell **600b** configures the UE **600a** to perform specific measurements and generate reports based on predefined events or conditions that impact network performance.

Following these measurements, the UE **600a** transmits the collected measurement reports back to the source aerial cell **600b.** This transmission marks a pivotal moment in the handover process, at operation **604,** as the source aerial cell **600b** evaluates the reports against established criteria and prevailing network conditions to determine the necessity of a handover. In an example case in which the evaluation indicates that a handover is warranted, at operation **605,** the source aerial cell **600b** initiates the next phase by sending a Hand-Over (HO) request to the target aerial cell **600c.**

Upon receiving the HO request, at operation **606,** the target aerial cell **600c** may conduct an admission control operation to assess its capacity to accommodate the UE **600a.** At operation **607,** once this assessment is completed, the target aerial cell **600c** may respond by transmitting a handover request acknowledgment back to the source aerial cell **600b,** confirming its readiness to proceed with the handover.

At operation **608,** the source aerial cell **600b** may issue a handover trigger command to the UE **600a,** prompting the UE **600a** to prepare for the transition. At operation **609,** the UE **600a** may then synchronize with the target aerial cell **600c,** ensuring that the UE **600a** is aligned with the new connection point (target aerial cell **600c**). At operation **610,** concurrently, the source aerial cell **600b** may manage the delivery of any buffered and in-transit packets by utilizing at least one compression mechanism, ensuring that no data is lost during the transition. Subsequently, at operations **611-612,** the source aerial cell **600b** forwards the compressed data to the target aerial cell **600c,** which buffers these packets in preparation for the UE's connection.

At operations **613, 614,** and **615,** once the UE **600a** successfully synchronizes and completes the handover with the target aerial cell **600c,** the target aerial cell **600c** initiates operations associated with the UE **600a** and decompresses the received data. Upon successful synchronization, at operation **616,** user data (e.g., Uplink (UL) and/or Downlink (DL)) is transferred seamlessly between the target aerial cell **600c** and the UE **600a.** On the other hand, at operation **617,** user data (e.g., DL) is transferred from the source aerial cell **600b** to the UE **600a.** At operations **618a, 618b,** and **618c,** the target aerial cell **600c** may transmit an ADAPS release message to the source aerial cell **600b** and a separate ADAPS release message to the UE **600a.** During this time period, the UE **600a** may discard the duplicate data. Subsequently, at operation **619,** the source aerial cell **600b** ceases all operations associated with the UE **600a,** effectively releasing the connection. At operation **620,** user data (e.g., UL/DL) is transferred seamlessly between the target aerial cell **600c** and the UE **600a,** completing the handover process and ensuring uninterrupted service for the user.

In the context of the ADAPS handover method, a primary distinction between the ADAPS handover method according to one or more embodiments of the disclosure and related art DAPS lies in the implementation of compression during the transmission of packets from the source aerial cell **600b** to the target aerial cell **600c.** For example, since the aerial cell replacement process necessitates that all connected UE **600a** undergo this transition (e.g., compression) simultaneously, a substantial volume of data packet transmission that exceeds the capacity of the wireless link between the source aerial cell **600b** and target aerial cell **600c** may be transmitted. Following this, target aerial cell **600c** decompresses the payload and subsequently distributes the downlink packets to each UE **600a** on an individual basis. The ADAPS handover-based LAP replacement protocol is designed for both standalone and augmented deployments, particularly for URLLC services. A comprehensive analysis of the aerial cell replacement scenario is presented in the following sections (e.g., equation 1 to equation 9).

**Table 1** as provided below presents a summary of the analysis of different triggers for LAP replacement according to one or more embodiments, but the disclosure is not limited thereto. The different triggers may be classified as per their response times under different deployment and user scenarios.

**Table 1**

| Trigger Type | Scenario | | Response Time |
| --- | --- | --- | --- |
| | Deployment | User Req. | |
| Low Power | Standalone, Augmented | URLLC | Very Fast |
| | Standalone | Any (other than URLLC) | Moderate |
| | Augmented | High bandwidth | Fast |
| | Augmented | Low bandwidth | Moderate |
| Capacity Reconfiguration | Standalone | Any | Not Applicable |
| | Augmented | URLLC | Very Fast |
| | Augmented | High bandwidth | Fast |
| | Augmented | Low bandwidth | Moderate |
| Malfunction | Standalone | Any | Fast |
| | Augmented | High bandwidth | Fast |
| | Augmented | Low bandwidth | Moderate |

For example, for users who require high bandwidth, their sessions need to be transferred to the new LAP fast enough so that they do not experience degradation in data rates. However, for moderate-to-low bandwidth users, the session transfer can be on a best-effort basis. The standalone deployment may require fast session transfers only during malfunctions in the LAP. In a coverage enhancement deployment, a LAP replacement to change the capacity of the aerial cell may not be required. For URLLC users, the response time may be very fast, with nearly zero interruption time, whenever possible.

In one or more embodiments, in a model of the system, there are UEs on the ground that are distributed uniformly in the coverage area of the aerial cell. Two deployments are modeled. As shown in **FIG. 1A,** the standalone deployment, there are no terrestrial gNBs in the UxNB's coverage area, and as shown in **FIG. 1B,** in the augmented deployment, each UE is served with a Dual Connectivity (DC) link, viz. the terrestrial gNB (anchor) and the secondary link with the UxNB. In both cases, UE's data traffic is forecasted and classified as low or high. The notations used for some of the key parameters in the system model are summarized in Table 2 as provided below, while others are defined as and when they are used.

**Table 2**

| Parameter | Value |
| --- | --- |
| $gNB_{cap}$ | Total cell capacity of the gNB |
| $UxNB_{cap}^{source}$ , $UxNB_{cap}^{target}$ | Total cell capacity of the source and target UxNB, respectively |
| $UE_iUL_{size}$, $UE_iDL_{size}$ | Forecasted uplink and downlink traffic sizes for a UE with an index i |
| $Thresh_{high}$ | Threshold traffic size used to identify UEs with high traffic requirements. |
| $\lambda_{UxNB}$ | The failure rate for a UxNB |
| $T_{replace}$ | The time between two successive replacements of LAP due to low power levels |

(continued)

| Parameter | Value |
| --- | --- |
| $User_{cap}$ | The total data traffic requirement from all the UEs in the network |
| $NW_{cap}$ | The total data traffic capacity in the network |

In one or more embodiments, for each UE (e.g., UE 600a), a Neural Network (NN) model is used for forecasting the UL and DL buffers, expressed as $h_{NN}(t)$, where $h_{NN}(t)$ is the inference time hypothesis (e.g., prediction) of the trained NN model. The forecasted UL and DL buffer for each UE (e.g., UE 600a) are given by equations (1) and (2), respectively.

$$UE_i UL_{size} = h_{NN}(previous\ t\ UL\ features) \qquad (1)$$

$$UE_i DL_{size} = h_{NN}(previous\ t\ DL\ features) \qquad (2)$$

In one or more embodiments, each UE (e.g., UE 600a) in the network is classified as belonging to a set of users with requirements for URLLC, $Urllc = \{...\}$, high traffic, $High_{traffic} = \{...\}$ or to a set of users with low or medium traffic, $Low_{traffic} = \{...\}$ as given by equation (3). $UE_{traffic}QCI$, defines the Quality-of-Service Identifier (5QI) pertaining to the values for URLLC. $Thresh_{high}$, defines the threshold of traffic size that the network uses to identify users with high data requirements.

$$UE_i \in \begin{cases} Urllc\ if\ (UE_{traffic}QCI\ \in URLCC) \\ High_{traffic}\ if\ (UE_i UL_{size} + UE_i DL_{size}) > Thresh_{high} \\ Low_{traffic},\ otherwise \end{cases} \qquad (3)$$

In one or more embodiments, the replacement triggers may be modeled as described below.

For example, the replacements due to low power levels may be modeled as periodic events in the network, with a period of $T_{replace}$.

For example, the replacements due to capacity change may be modelled directly by looking at the aggregate of the data traffic requirements of all the users in the network. The total required network capacity is given by equation (4), while the total available network capacity is given by equation (5). The total capacity of the aerial cell currently deployed in the network is denoted by $UxNB_{cap}^{source}$ and $gNB_{cap}$ represents the total capacity of the terrestrial cell. In a standalone deployment $gNB_{cap}$ can be assumed to be zero, as there is no terrestrial cell in such a deployment. In the network that manages UxNB(s) (e.g., source aerial cell **600b,** target aerial cell **600c,** etc.) with different capacities, it can replace a source UxNB with a new one depending on the aggregated $User_{cap}$ for N users in the network. Thus, if $User_{cap} >$

$NW_{cap}$, then replacement happens with a target UxNB such that $UxNB_{cap}^{target} > UxNB_{cap}^{source}$.

Similarly, when $NW_{cap} \gg User_{cap}$, the network can replace the source UxNB with a target UxNB such that $UxNB_{cap}^{target} < UxNB_{cap}^{source}$.

$$User_{cap} = \sum_{i=1}^{i=N}(UE_i UL_{size} + UE_i DL_{size}) \qquad (4)$$

$$NW_{cap} = UxNB_{cap}^{source} + gNB_{cap} \qquad (5)$$

For example, the replacement due to malfunction in the drone equipment may be modeled by $\lambda_{UxNB}$, the failure rate. The failure rate is the inverse of the mean time between failures (MTBF) for the UxNB.

In one or more embodiments, the network supports replacement protocols such as the *handover,* the link management, the ACC, and the ADAPS.

In one or more embodiments, a latency of aerial cell handover, $HO_{latency}^{M}$ is given by equation (6), where there are M UEs (e.g., **11)** that undergo a handover from source LAP (e.g., source aerial cell **12)** to target LAP (e.g., target aerial cell **16)** (as illustrated in FIG. 2). The delays for each step for handover preparation are given by $T(Meas_{cntrl})$, $T(Meas_{Rpt})$, $T(HO_{Decision})$, $T(HO_{Req})$, $T(Adm_{Cntrl})$, and $T(HO_{Ack})$. $T(Meas_{cntrl})$ is the time to measure network parameters, $T$

($Meas_{Rpt}$) is the time for reporting the measured network parameters, $T(HO_{Decision})$ is the time for performing a handover decision, $T(HO_{Req})$ is the time for requesting handover, $T(Adm_{Cntrl})$ is the time for admission control, and $T(HO_{Ack})$ is the time for acknowledging the handover request. In addition to the delays at each step for handover preparation, the delays in RRC message exchange and acquiring the first available Physical Random Access Channel (PRACH) occasion are given by $T_{RRC_{PROCEDURE_{DELAY}}}$ and $T_{IU}$ respectively. The total delay in transmitting and processing the handover-related messages at the UE and target LAP is given by $T_{MsgDelay}$. The delay in acquiring full timing information at the UE is denoted by $T_\delta$.

$$HO_{latency}^M = \left( \sum_{k=1}^{k=M} \frac{T(Meas_{Cntrl}) + T(Meas_{Rpt}) + T(HO_{Decision}) + T(HO_{Req})}{+ T(Adm_{Cntrl}) + T(HO_{Ack})} \right) +$$

$$\sum_{k=1}^{k=M} (T_{RRC_{procedure_{delay}}} + T_{IU} + T_{MsgDelay} + T_\delta) \qquad (6)$$

In one or more embodiments, a latency of aerial cell link management, $LM_{latency}^M$, is given by equation (7) where there are M UEs (e.g., **11**) that undergo link deactivation and activation on the source LAP (e.g., source aerial cell **12**) and the target LAP (e.g., target aerial cell **16**), respectively (as illustrated in FIG. 3). $T_{link_{deact}}$ and $T_{link_{act}}$ are delays in break (link deactivation) and make (link activation), as the UxNB gets replaced. $T_{linkadd}$ is the time taken in deciding to add the DC link with the target LAP, depending on the amount of data traffic for the UE (e.g., UE 600a).

$$\sum_{k=1}^{k=M} \left( \begin{array}{c} T_{RRC_{PROCEDURE_{DELAY}}} + T_{link_{deact}} \\ + \left( T_{RRC_{PROCEDURE_{DELAY}}} + T_{IU} + T_{MsgDelay} + T_\delta \right) \\ + T_{RRC_{PROCEDURE_{DELAY}}} + T_{link_{act}} + T_{linkadd} \end{array} \right) \qquad (7)$$

In one or more embodiments, a latency of aerial cell cloning, $ACC_{latency}^M$, is given by equation (8) where there are $M$ UEs (e.g., **11**) that undergo aerial link cloning from the source LAP (e.g., source aerial cell **12**) to the target LAP (e.g., target aerial cell **16**) (as illustrated in **FIG. 4**).

In one or more embodiments, $T_{Comp}(size)$ is the time taken to compress the cloning container of length *size.* $CC_{Size}$ is the length of the cloning container for one UE (e.g., UE 600a). *Compress*() is the compression function, *DeCompress*() is the decompression function. $A2A_{LinkTP}$ is the maximum bandwidth of the inter-UxNB air-to-air (A2A) link during the cloning procedure, $T_{Decomp}(size)$ is the time taken to decompress the cloning container of length *size,* and apply it. $UPlane_{Latency}$ is the message delay for the redirection command to the UEs (e.g., UE 600a).

$$ACC_{latency}^M = T_{Comp}\left(\sum_{k=1}^{k=M}(CC_{Size})\right) + \left( \frac{Compress(\sum_{k=1}^{k=M}(CC_{Size}))}{A2A_{LinkTP}} \right) +$$

$$T_{Decomp}\left(Compress\left(\sum_{k=1}^{k=M}(CC_{Size})\right)\right) + UPlane_{Latency} \qquad (8)$$

The latency of ADAPS handover, $aDAPS_{latency}^M$ is given by equation (9), where there are M UEs (e.g., UE 600a) that undergo ADAPS handover from source LAP (e.g., source aerial cell **600b**) to target LAP (e.g., target aerial cell **600c**) (as illustrated in **FIG. 6**). Contrary to the delays at each step, for handover preparation and the delay in RRC message exchange the delay for acquiring the first available PRACH occasion is hidden, as the data communication is not interrupted, as explained above.

Thus, the total delay in transmitting and processing the handover-related messages at the UE (e.g., UE 600a) and target LAP (e.g., target aerial cell **600c**) and the delay in acquiring full-timing information at the UE (e.g., UE 600a) are not part of the latency model for the ADAPS.

$$aDAPS_{latency}^M = \sum_{k=1}^{k=M} \frac{T(Meas_{Cntrl}) + T(Meas_{Rpt}) + T(HO_{Decision}) + T(HO_{Req})}{+ T(Adm_{Cntrl}) + T(HO_{Ack}) + (T_{RRC_{procedure_{delay}}})} \qquad (9)$$

**FIG. 7** is a flow diagram illustrating a method **700** for performing the ADAPS handover, according to an embodiment of the disclosure. The method **700** may execute multiple operations to perform the ADAPS handover, which are given below.

At operation **701,** the method **700** may include determining the one or more network parameters associated with at least one of the plurality of UEs **600a** and the source aerial cell **600b.** For example, the plurality of UEs **600a** is connected with the source aerial cell **600b.** At operation **702,** the method **700** may include selecting one or more UEs from the plurality of UEs **600a** that require the HO from the source aerial cell **600b** to the target aerial cell **600c** based on the one or more determined network parameters. At operation **703,** the method **700** may include transmitting the HO request to the target aerial cell **600c** for the one or more selected UEs **600a,** where the target aerial cell **600c** prepares one or more network resources for the one or more selected UEs **600a.** At operation **704,** the method **700** may include receiving the acknowledgment of the transmitted HO request from the target aerial cell **600c.**

At operation **705,** the method **700** may include transmitting the notification message to the one or more selected UEs **600a** for performing the HO by utilizing the DAPS. At operation **706,** the method **700** may include receiving, after transmitting the notification message, one or more data packets from the one or more selected UEs **600a.** At operation **707,** the method **700** may include aggregating one or more received data packets associated with the one or more selected UEs **600a** at the source aerial cell **600b.** At operation **708,** the method **700** may include compressing the aggregated data packets into a single payload. At operation **709,** the method **700** may include transmitting the compressed payload to the target aerial cell **600c,** to facilitate seamless transitions between aerial cells. Further, a detailed description related to the various operations of **FIG. 7** is covered in the description related to **FIG. 5,** and **FIG. 6,** and is omitted herein for the sake of brevity.

**FIG. 8** illustrates a plurality of operations associated with an ACeR method, according to an embodiment of the disclosure. The ACeR module **542** may be configured to perform one or more operations associated with the ACeR method, which is mentioned below.

In one or more embodiments, the ACeR method may assist the network in selecting a different and appropriate session transfer protocol for each user. The ACeR method may assist based on the user's predicted data traffic and the trigger for the replacement to meet the required energy and latency optimality in the network.

In one or more embodiments, the disclosure also provides a comprehensive mathematical analysis of replacement scenarios in LAP-based aerial cells in terms of the different periodic and aperiodic triggers in the various network deployments for creating decision variables for protocol selection in the ACeR method, which is mentioned below. Particularly, the replacement triggers, forecasted data traffic, and the latency of respective session transfer protocols are mathematically modeled in the system having the ACeR method. Further, the system is used for the optimal selection of a session transfer protocol for each UE (e.g., UE 600a). The ACeR method reduces the energy consumption of the network, for example, by 34.5% when compared to a network that uses a fixed protocol for every replacement event, as the ACeR method is backed by extensive system-level simulation. The ACeR method also demonstrates, for example, around a 14% to 18% reduction in energy consumption on average across all replacement events in the system-level simulation for 6G network deployment.

In one or more embodiments, the ACeR method proposed in the disclosure gives the operator a network optimization tool to select and apply an optimal protocol for data session transfer for each user from the source LAP (e.g., source aerial cell **600b**) to the target LAP (e.g., target aerial cell **600c**) during the LAP replacement event.

In one or more embodiments, referring to **FIG. 8,** the ACeR method uses knowledge of 5QI to assign UEs (e.g., UE 600a) to URLLC and the forecasting service to predict the per-user data traffic requirement to assign UEs (e.g., UE 600a) in either $High_{traffic}$ or $Low_{traffic}$ using equation (3).

In one or more embodiments, the replacement events are detected by the ACeR method using $T_{replace}$, $\lambda_{UxNB}$ and equations (4), and (5).

In one or more embodiments, the ACeR method uses the knowledge of the deployment type, given by $D_{type}$, equation (10), and the response time requirements as captured in Table 1, to optimize the overall latency and energy consumption in the system by selecting the session transfer protocol for each user. The notations for some of the key parameters used in the model for the ACeR method are summarized in Table 3, while others are defined as and when they are used.

**Table 3**

| Parameter | Value |
|---|---|
| $D_{type}$ | Deployment type in the network, 0 for Standalone, and 1 for Augmented **(FIGS. 1A and 1B)** |
| $N(t)$ | Number of users in the network at any time instant $t$ |

(continued)

| Parameter | Value |
|---|---|
| $N_1(t), N_2(t), N_3(t), N_4(t)$ | Number of users undergoing handover, link management, cloning, and ADAPS, at any time instant $t$ |
| $\delta_{cap}$ | Difference between the required network capacity and the available network capacity |

$$D_{type} = \begin{cases} 1, & Standalone \\ 0, & Augmented \end{cases} \qquad (10)$$

$$N_1(t) + N_2(t) + N_3(t) + N_4(t) = N(t) \qquad (11)$$

$$N_1(t) = 0 \; ; for \; D_{type} = 0 \qquad (12)$$

$$N_2(t) = 0 \; ; for \; D_{type} = 1 \qquad (13)$$

$$N_3(t) \geq \min |High_{traffic}| \qquad (14)$$

$$N_4(t) \geq \min |Urllc| \qquad (15)$$

In the network with $N(t)$ users at time instant $t$, let there be $N_1(t)$, $N_2(t)$, $N_3(t)$ and $N_4(t)$ be users, given by equation (11), each undergoing handover, link management, cloning, and ADAPS respectively, during the replacement event at time instant $t$, given by equation (16). Once the operation begins, the deployment type ($D_{type}$) does not change frequently in the network.

$$Replace_{event}(t) = \begin{cases} 1; & t = n \times T_{replace}; \; n = 1,2,.. \\ 1; & User_{cap}(t) > NW_{cap}(t), \delta_{cap} > \delta_{replace_{hi}} \\ 1; & NW_{cap}(t) > User_{cap}(t), \delta_{cap} > \delta_{replace_{low}} \\ 1; & t = m \times \left(\frac{1}{\lambda_{UxNB}}\right); m = 1,2,.. \\ 0; & Replace_{event}(t-1)|..|Replace_{event}(t-t_{gap}) = 1 \end{cases} \qquad (16)$$

In equation (16), $\delta_{cap}$ is the difference between the required capacity and the available network capacity, as given by equations (4) and (5). $\delta_{replace_{hi}}$ and $\delta_{replace_{low}}$ are network-specific thresholds for it to take a decision to replace the serving LAP with a new LAP offering a different capacity; more than the serving LAP or less than the serving LAP, respectively. $t_{gap}$ is a network-specific time period (replacement hysteresis) during which a replacement event can be ignored. If $Replace_{event}(t)$ equals 1, then a replacement event has been detected. If $Replace_{event}(t)$ equals 0 then a replacement event has not been detected.

As given in equations (12) and (13), handover is not applicable in an augmented deployment (except for the condition when the replacement is due to capacity requirements i.e. $\delta_{cap} > \delta_{replace_{hi}}$). Link management is not applicable in a standalone deployment. Expression (17) depicts that cloning is the fastest protocol.

$$ACC_{latency} < HO_{latency} < LM_{latency} \qquad (17)$$

However, the ADAPS handover method according to one or more embodiments of the disclosure is even quicker than cloning, as there is near zero interruption as modelled in equation (9). Thereby the latencies can be summarized as expression (18).

$$aDAPS_{latency} < ACC_{latency} < HO_{latency} < LM_{latency} \qquad (18)$$

Based on equation (16), the guiding value of the number of users going through aerial cell cloning is at least the cardinality of the set $High_{traffic}$ given by equation (3), and the number of users going through ADAPS is at least the cardinality of the set $Urllc$ given by equation (3).

In one or more embodiments, the overall latency of the replacement is therefore given by $Replace_{lat}(t)$ in equation (19), which is the sum of the product of the number of users and the latency of the respective session transfer protocol selected for them.

$$Replace_{lat}(t) = Replace_{event}(t) \times \left( N_1(t) \times D_{type} \times \left( \frac{HO_{latency}^{N_1(t)}}{N_1(t)} \right) + N_2(t) \times \right.$$

$$D_{type} \times \left( \frac{LM_{latency}^{N_2(t)}}{N_2(t)} \right) + N_3(t) \times D_{type} \times \left( \frac{ACC_{latency}^{N_3(t)}}{N_3(t)} \right) + N_4(t) \times D_{type} \times$$

$$\left. \left( \frac{aDAPS_{latency}^{N_4(t)}}{N_4(t)} \right) \right) \tag{19}$$

It is well established that the random-access procedure is taxing for the UE (e.g., UE 600a), as the overall energy consumption in that step (power ramping during retrials, primarily due to preamble collisions and contention resolution failure) is significantly higher than all the other steps. The random-access step is included in the handover, link management, and the ADAPS protocols (ADAPS handover method), as shown in **FIGS. 2, 3,** and **6.** At the same time, the cloning container size in the ACC protocol needs to be evaluated based on a standard encoding mechanism like ASN.1 encoding. The additional overhead in computation (compression and decompression) and container transfer in ACC need to be considered as part of the energy consumption. The ADAPS handover method also requires compression and decompression of data packets forwarded between the source LAP (e.g., source aerial cell **600b)** and the target LAP (e.g., target aerial cell **600c).** Thus, ignoring the other factors in the messaging differences amongst the protocols, the cost function of energy consumption, for a replacement event $Replace_{event}(t)$ is given as $Replace_E(t),$ equation (20).

$$Replace_E(t) = \left( (N_1(t) + N_2(t) + N_4(t)) \times Pr_E \right) + \left( Cd_E \left( \sum_{k=1}^{k=N_3(t)} CC_{size} \right) + \right.$$

$$Tr_E \left( \sum_{k=1}^{k=N_3(t)} CC_{size} \right) \right) + \left( Cd_E \left( \sum_{k=1}^{k=N_4(t)} PU_{size} \right) + Tr_E \left( \sum_{k=1}^{k=N_4(t)} PU_{size} \right) \right) \tag{20}$$

$Pr_E$ is the energy consumption in the random-access phase. $Cd_E(size)$ is the energy consumed in the compression and decompression functions for a given length ($size$) of the container. $Tr_E(size)$ denotes the energy consumption in the transfer function for a given length ($size$). Also, for a certain known size $K_1$, the energy consumption factor in ACC and ADAPS is more than an integer multiple $K_2$ of the random-access phase, given by the constraint (21). $K_1$ is the size of the payload from the number of users ($K_3$ and $K_4$ respectively for ACC and ADAPS), given by equation (22)

$$Cd_E(K_1) + Tr_E(K_1) > K_2 \times Pr_E \tag{21}$$

$$\sum_{k=1}^{k=K_3} CC_{size} = \sum_{k=1}^{k=K_4} (PU_{Size}) = K_1 \tag{22}$$

In one or more embodiments, a system optimization function **800** in the ACeR method tries to jointly optimize both equations (19) and (20), i.e. the latency as well as the energy consumption, to arrive at the values of $N_1(t), N_2(t), N_3(t),$ and $N_4(t)$ for each $Replace_{event}(t)$.

Increasing $N_4(t)$ can reduce the latency, as given by expression (18), thus $Replace_{lat}(t)$ is a minimum with $N_4(t) = N(t),$ or $N_1(t) = N_2(t) = N_3(t) = 0$. It will however increase the energy consumption, $Replace_E(t)$ due to the constraint (21). Also, not every UE requires that its session transfer latency be low, as captured in **Table 1.** On analyzing equations (19) and (20) for each $D_{type}$ and using constraints (12), (13), (14) and (15), equations (23), (24) are obtained for a standalone deployment ($D_{type} = 1$). Similarly, equations (25), (26) for an augmented deployment ($D_{type} = 0$) are obtained. These can be solved empirically for network deployment, and the same is captured in the disclosure.

$$Replace_{lat}^{SA}(t) = \sum_{k=1}^{k=N_1(t)}\left(T(Meas_{Cntrl}) + T(Meas_{Rpt}) + T(HO_{Decision}) + \right.$$

$$T(HO_{Req}) + T(Adm_{Cntrl}) + T(HO_{Ack}) + \left(T_{RRC_{procedure_{delay}}} + T_{IU} + T_{MsgDelay} + T_\delta\right)\right) +$$

$$T_{Comp}(\sum_{k=1}^{k=N_3(t)}(CC_{Size})) + \left(\frac{Compress(\sum_{k=1}^{k=N_3(t)}(CC_{Size}))}{A2A_{LinkTP}}\right) +$$

$$T_{Decomp}(Compress(\sum_{k=1}^{k=N_3(t)}(CC_{Size}))) + UPlane_{Latency}$$

$$(23)$$

$$Replace_E^{SA}(t) = N_1(t) \times Pr_E + Cd_E\left(\sum_{k=1}^{k=N_3(t)} CC_{size}\right) + Tr_E(\sum_{k=1}^{k=N_3(t)} CC_{size})$$

$$(24)$$

$$Replace_{lat}^{Aug}(t) =$$

$$\sum_{k=1}^{k=N_2(t)}\begin{pmatrix} T_{RRC_{PROCEDURE_{DELAY}}} + T_{link_{deact}} \\ + \left(T_{RRC_{PROCEDURE_{DELAY}}} + T_{IU} + T_{MsgDelay} + T_\delta\right) + \\ +T_{RRC_{PROCEDURE_{DELAY}}} + T_{link_{act}} + T_{linkadd} \end{pmatrix} +$$

$$T_{Comp}(\sum_{k=1}^{k=N_3(t)}(CC_{Size})) + \left(\frac{Compress(\sum_{k=1}^{k=N_3(t)}(CC_{Size}))}{A2A_{LinkTP}}\right) +$$

$$T_{Decomp}(Compress(\sum_{k=1}^{k=N_3(t)}(CC_{Size}))) + UPlane_{Latency} \qquad (25)$$

$$Replace_E^{Aug}(t) = N_2(t) \times Pr_E + Cd_E\left(\sum_{k=1}^{k=N_3(t)} CC_{size}\right) + Tr_E\left(\sum_{k=1}^{k=N_3(t)} CC_{size}\right)$$

$$(26)$$

Thus, the improvement in energy consumption or the efficiency of the ACeR method for time instant can be modelled as equations (27) and (28), for each of the deployment types, which compare the ACeR method with the fixed protocol, ACC, applied to all the users. The average improvement from the ACeR method for the entire duration (given by $T_{sim}$) in the system model is given by equations (29) and (30).

$$Efficiency_{ACeR}^{SA}(t) = \frac{\left(\begin{pmatrix} Cd_E\left(\sum_{k=1}^{k=N(t)} CC_{size}\right) \\ +Tr_E(\sum_{k=1}^{k=N(t)} CC_{size}) \end{pmatrix} - \left(Replace_E^{SA}(t)\right)\right) \times 100}{\begin{pmatrix} Cd_E\left(\sum_{k=1}^{k=N(t)} CC_{size}\right) \\ +Tr_E(\sum_{k=1}^{k=N(t)} CC_{size}) \end{pmatrix}}$$

$$(27)$$

$$Efficiency_{ACeR}^{Aug}(t) = \frac{\left(\left(\left(\begin{array}{c} Cd_E\left(\sum_{k=1}^{k=N(t)} CC_{size}\right) \\ +Tr_E(\sum_{k=1}^{k=N(t)} CC_{size}) \end{array}\right)\right) - \left(Replace_E^{Aug}(t)\right)\right) \times 100}{\left(\begin{array}{c} Cd_E\left(\sum_{k=1}^{k=N(t)} CC_{size}\right) \\ +Tr_E(\sum_{k=1}^{k=N(t)} CC_{size}) \end{array}\right)}$$

$$(28)$$

$$Efficiency_{ACeR}^{SA} = \left(\frac{1}{T_{sim}}\right) \int_0^{T_{sim}} Efficiency_{ACeR}^{SA}(t) \qquad (29)$$

$$Efficiency_{ACeR}^{Aug} = \left(\frac{1}{T_{sim}}\right) \int_0^{T_{sim}} Efficiency_{ACeR}^{SA}(t) \qquad (30)$$

In one or more embodiments, the disclosure/method ensures reduction in the overhead of packet forwarding from the source LAP (e.g., source aerial cell **600b**) to the target LAP (e.g., target aerial cell **600c**) necessary for bulk session handover during LAP replacement, by the ADAPS handover method. Further, the ACeR method uses traffic volume forecasting and energy optimization techniques to dynamically select an appropriate replacement protocol for each user from amongst handover, link management, aerial cell cloning, and the ADAPS handover method. Furthermore, backed by mathematical modelling and extensive simulation, the ACeR method reduces energy consumption, for example, by up to 34.7% compared to using fixed protocols as described in the related art techniques. The ACeR method demonstrates, for example, around a 14% to 18% reduction in energy consumption on average across all replacement events in the system-level simulation for 6G network deployment.

**FIG. 9** is a flow diagram illustrating a method **900** for performing the ACeR, according to an embodiment of the disclosure. The method **900** may execute multiple operations to perform the ACeR, which are given below.

At operation **901,** the method **900** may include receiving the aerial cell replacement trigger message from the source aerial cell **600b.** In one embodiment, the source aerial cell **600b** may detect a requirement to initiate the replacement event based on the one or more network parameters. At operation **902,** the method **900** may include initiating, upon receiving the aerial cell replacement trigger message, the replacement event for the source aerial cell **600b.** At operation **903,** the method **900** may include determining the one or more network parameters associated with at least one of the plurality of UEs **600a** and the source aerial cell **600b** during initiation of the replacement process, where the plurality of UEs **600a** is connected with the source aerial cell **600b.** At operation **904,** the method **900** may include selecting an optimal protocol for data session transfer for each UE during initiation of the replacement event based on at least one the aerial cell replacement trigger message and the one or more determined network parameters. At operation **905,** the method **900** may include performing the at least one action based on the selected optimal protocol for data session transfer. Further, a detailed description related to the various operations of **FIG. 9** is covered in the description related to **FIG. 5,** and **FIG. 8,** and is omitted herein for the sake of brevity.

In one or more embodiments, the method (ADAPS handover method and/or ACeR method) has several advantages over related art methodologies, for example, which are stated below.

Seamless handover: The ADAPS allows for handovers between aerial cells without any interruption, ensuring continuous connectivity for users.

Efficient data handling: By compressing and forwarding downlink packets, the method optimizes data transmission, reducing bandwidth usage and improving overall efficiency.

Low latency: The method is designed for URLLC, which is crucial for applications requiring real-time data transfer, such as remote control and autonomous systems.

User-centric protocol selection: The ACeR method adapts the session transfer protocol based on individual user traffic patterns, enhancing user experience by optimizing performance.

Energy efficiency: By selecting the most suitable protocol for each user, the method minimizes energy consumption, contributing to the sustainability of network operations.

Scalability: The dual-active protocol stack can efficiently manage multiple users simultaneously, making it suitable for scenarios with high user density.

Improved network reliability: The continuous connection and efficient data handling contribute to a more reliable network, reducing the chances of dropped connections during handovers.

According to another aspect of the disclosure, there is provided an electronic device including: a memory; a processor; a communicator; and a data controller, operably connected to the memory, the processor, and the communicator, the data controller configured to: receive an aerial cell replacement trigger message from a source aerial cell, initiate, upon receiving the aerial cell replacement trigger message, a replacement process for the source aerial cell, determine one or more network parameters associated with the source aerial cell and at least one of a plurality of User Equipments (UEs) connected with the source aerial cell during the initiation of the replacement process, select an optimal protocol for data session transfer for each of the plurality of UEs during the initiation of the replacement process based on at least one the aerial cell replacement trigger message and the one or more network parameters, and perform at least one action based on the selected optimal protocol for data session transfer.

An optimal protocol may be otherwise known as a selected protocol. The optimal protocol may be selected based on (e.g. based on an optimization of) latency and energy consumption. The selection may optimize overall latency and energy consumption in the system by selecting the session transfer protocol for each user (e.g. each UE). The optimization may take into one account one or more measurement reports received from each UE, a type of network deployment, a type of replacement trigger, a type of user requirement, and/or response time information.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the invention.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method to implement the inventive concept as taught herein. The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment.

One or more embodiments of the disclosure can be implemented using at least one hardware device and performing network management functions to control the elements.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the embodiments of the disclosure. It is to be understood that the phraseology or terminology employed herein is for the purpose of description and not of limitation. Therefore, while the embodiments herein have been described in terms of example embodiments, those skilled in the art will recognize that the embodiments herein can be practiced with modification within the scope of the embodiments as described herein.

## Claims

1. A method performing by a source aerial cell, the method comprising:

   determining (701) one or more network parameters associated with the source aerial cell and at least one of a plurality of User Equipments, UEs, connected with the source aerial cell;
   selecting (702) one or more UEs from the plurality of UEs that require handover from the source aerial cell to a target aerial cell based on the one or more network parameters;
   transmitting (703) a handover request to the target aerial cell for the one or more selected UEs;
   receiving (704) an acknowledgment of the transmitted handover request from the target aerial cell;
   transmitting (705) a notification message to the one or more selected UEs for performing the handover by utilizing a Dual Active Protocol Stack;
   receiving (706), after transmitting the notification message, one or more data packets from the one or more selected UEs;
   obtaining (707) aggregated data packets by aggregating the one or more data packets associated with the one or more selected UEs;
   compressing (708) the aggregated data packets into a compressed payload; and
   transmitting (709) the compressed payload to the target aerial cell, to facilitate seamless transitions between the source aerial cell and the target aerial cell.

2. The method of claim 1, further comprising:

receiving a confirmation message from the target aerial cell, the confirmation message indicating that the one or more selected UEs have successfully synchronized with the target aerial cell;

discarding, upon receiving the confirmation message, one or more operations associated with the one or more received data packets and releasing one or more network resources associated with the one or more selected UEs; and

receiving a notification message from the target aerial cell, the notification message comprising information instructing the source aerial cell to cease transmission of the compressed payload to the target aerial cell.

3. The method of claim 1 or claim 2, wherein the selecting the one or more UEs from the plurality of UEs that require the handover from the source aerial cell to the target aerial cell comprises:

analyzing data traffic of each of the plurality of UEs, the each of the plurality of UEs being configured to transit the one or more data packets to the source aerial cell or receive the one or more data packets from the source aerial cell;

categorizing, by at least one Machine Learning model, the plurality of UEs based on a result of traffic analysis to determine whether handover from the source aerial cell to the target aerial cell is required;

selecting, based on the categorization, the one or more UEs from the plurality of UEs that require the handover from the source aerial cell to the target aerial cell.

4. The method of any preceding claim, wherein the determining the one or more network parameters associated with the at least one of the plurality of UEs and the source aerial cell comprises:

establishing a connection with the plurality of UEs, the plurality of UEs being configured to transmit the one or more data packets to the source aerial cell via the established connection or receive the one or more data packets from the source aerial cell via the established connection; and

determining, upon establishing the connection, the one or more network parameters associated with the at least one of the plurality of UEs and the source aerial cell,

wherein the one or more network parameters comprise at least one of one or more measurement reports received from each of the at least one of the plurality of UEs, a type of network deployment, a type of replacement trigger, a type of user requirement, or response time information.

5. The method of any preceding claim, wherein the handover request comprises one or more UE contexts associated with the one or more selected UEs and the one or more UE contexts comprise an identifier, Quality of Service requirement information, or a type of network resource requirement information.

6. The method of any preceding claim, wherein the notification message comprises Radio Resource Control connection reconfiguration information.

7. The method of any preceding claim, wherein the compressed payload is transmitted over a network interface, and wherein the network interface comprises at least one of an Xn interface or a Point-to-Point interface.

8. A method comprising:

receiving (901) an aerial cell replacement trigger message from a source aerial cell,

initiating (902), upon receiving the aerial cell replacement trigger message, a replacement process for the source aerial cell;

determining (903) one or more network parameters associated with the source aerial cell and at least one of a plurality of User Equipments, UEs, connected with the source aerial cell during the initiation of the replacement process;

selecting (904) an optimal protocol for data session transfer for each of the plurality of UEs during the initiation of the replacement process based on at least one the aerial cell replacement trigger message and the one or more network parameters; and

performing (905) at least one action based on the selected optimal protocol for data session transfer.

9. The method of claim 8, wherein the at least one action comprises a handover action, a link management action, an Aerial Cell Cloning action, and an aerial Dual Active Protocol Stack action.

10. The method of claim 9, wherein the aerial Dual Active Protocol Stack action comprises:

selecting (702), by the source aerial cell, one or more UEs from the plurality of UEs that require handover from the source aerial cell to a target aerial cell based on the one or more network parameters;

transmitting (703), by the source aerial cell, a handover request to the target aerial cell for the one or more selected UEs;

receiving (704), by the source aerial cell, an acknowledgment of the transmitted handover request from the target aerial cell;

transmitting (705), by the source aerial cell, a notification message to the one or more selected UEs for performing the handover by utilizing a Dual Active Protocol Stack;

receiving (706), after transmitting the notification message, by the source aerial cell, one or more data packets from the one or more selected UEs;

obtaining (707) aggregated data packets by aggregating, by the source aerial cell, one or more received data packets associated with the one or more selected UEs at the source aerial cell;

compressing (708), by the source aerial cell, the aggregated data packets into a compressed payload; and

transmitting (709), by the source aerial cell, the compressed payload to the target aerial cell to facilitate seamless transitions between the source aerial cell and the target aerial cell.

11. The method of claim 10, the method further comprising:

receiving, by the source aerial cell, a confirmation message from the target aerial cell, wherein the confirmation message indicates that the one or more selected UEs have successfully synchronized with the target aerial cell;

upon receiving the confirmation message, discarding, by the source aerial cell, one or more operations associated with the one or more received data packets and releasing one or more network resources associated with the one or more selected UEs ;

receiving, by the source aerial cell, a notification message from the target aerial cell, wherein the notification message instructs the source aerial cell to cease transmission of the compressed payload to the target aerial cell.

12. The method of claim 10 or claim 11, wherein the selecting the one or more UEs from the plurality of UEs that require the handover from the source aerial cell to the target aerial cell comprises:

analyzing data traffic of each of the plurality of UEs, the each of the plurality of UEs configured to transit the one or more data packets to the source aerial cell or receive the one or more data packets from the source aerial cell;

categorizing, by at least one Machine Learning model, the plurality of UEs based on a result of traffic analysis to determine whether handover from the source aerial cell to the target aerial cell is required;

selecting, based on the categorization, the one or more UEs from the plurality of UEs that require the handover from the source aerial cell to the target aerial cell.

13. The method of any of claims 8-12, wherein the one or more network parameters comprises at least one of one or more measurement reports received from each UE, a type of network deployment, a type of replacement trigger, a type of user requirement, or response time information.

14. The method of any of claims 8-13,

wherein the aerial cell replacement trigger message indicates a type of replacement trigger for the source aerial cell,

wherein the type of replacement trigger comprises a low-power trigger, a capacity reconfiguration trigger, and a malfunction trigger,

wherein the low power trigger indicates that the source aerial cell is operating at a power level insufficient to provide one or more network services to the plurality of UEs, leading to the replacement of the source aerial cell with the target aerial cell;

wherein the malfunction trigger indicates that the source aerial cell is experiencing at least one of a mechanical failure or a software malfunction, leading to the replacement of the source aerial cell with the target aerial cell; and

wherein the capacity reconfiguration trigger indicates that the source aerial cell is unable to provide one or more network services to the plurality of UEs due to insufficient capacity to handle the plurality of UEs, leading to the replacement of the source aerial cell with the target aerial cell that has a higher capacity to accommodate the plurality of UEs, and/or wherein the capacity reconfiguration trigger indicates that the source aerial cell is either ideally utilized or underutilized, leading to the replacement of the source aerial cell with the target aerial cell.

15. An electronic device comprising:

a memory (510);
a processor (520);
a communicator (530); and
a data controller (540), operably connected to the memory (510), the processor (520), and the communicator (530), the data controller (540) being configured to:

determine (701) one or more network parameters associated with a source aerial cell and at least one of a plurality of User Equipments, UEs, connected with the source aerial cell;
select (702) one or more UEs from the plurality of UEs that require handover from the source aerial cell to a target aerial cell based on the one or more network parameters;
transmit (703) a handover request to the target aerial cell for the one or more selected UEs;
receive (704) an acknowledgment of the transmitted handover request from the target aerial cell;
transmit (705) a notification message to the one or more selected UEs for performing the handover by utilizing a Dual Active Protocol Stack;
receive (706), after transmitting the notification message, one or more data packets from the one or more selected UEs;
obtain (707) aggregated data packets by aggregating one or more data packets associated with the one or more selected UEs;
compress (708) the aggregated data packets into a compressed payload; and
transmit (709) the compressed payload to the target aerial cell, to facilitate seamless transitions between the source aerial cell and the target aerial cell.

# FIG. 1A (Related art)

Backhaul interface

Air interface

Drone cell (12)

UE (11)

Terrestrial cell (13)

Core network (14)

UxNB deployment standalone scenario

# FIG. 1B (Related art)

Backhaul interface
Air interface

Drone cell (12)

UE (11)

Terrestrial cell (13)

Core network (14)

UxNB deployment augmented scenario

# FIG. 1C (Related art)

30

Backhaul interface
Air interface

Drone cell
(Source aerial cell)
(12)

UE (11)

Terrestrial cell (13)

Core network (14)

Aerial cell fleet manger (15)

(Target aerial cell)
(16)

Energy-depletion, capacity-depletion, malfunction scenario

# FIG. 2 (Related art)

# FIG. 3 (Related art)

| 13 | 11 | 12 | 16 |
|---|---|---|---|
| Terrestrial cell | UE | Source aerial cell | Target aerial cell |

User data —301    User data —302

Aerial link deactivation

Aerial deactivate —303

Aerial link deactivation —304

Release link —305

306— Stop operation

User data —307

Aerial link deactivation

308— Stop operation

Aerial link activation —309

UE synchronization (RACH) —310

User data —311    User data —312

# FIG. 4 (Related art)

# FIG. 5

Electronic device  ⌐500

System  ⌐501

Memory  ⌐510

Processor  ⌐520

Processor  ⌐530

Data controller  ⌐540

Aerial Dual Active Protocol Stack (ADAPS) module  ⌐541

Adaptive Aerial Cell Replacement (ACeR) module  ⌐542

# FIG. 6

```
      ┌──────600a          ┌──────600b              ┌──────600c
   ┌─────────┐          ┌─────────┐              ┌─────────┐
   │   UE    │          │ Source  │              │ Target  │
   │         │          │aerial cell│            │aerial cell│
   └─────────┘          └─────────┘              └─────────┘
```

User data (DL/UL) ⟷ 601

UE HO (ADAP) ⟶ 602

Measurement control and report ⟶ 603

HO decision ⟶ 604

HO request ⟶ 605

Admission control ⟵ 606

HO request ack ⟶ 607

HO trigger ⟶ 608

SN transfer status ⟶ 609

Compress ⟶ 610

User data (DL/UL) ⟶ 612     Data forwarding ⟶ 611

Synchronize with new cell ⟶ 613     Start operation and decompress ⟶ 614

UE synchronize and HO complete ⟶ 615

User data (DL/UL) ⟶ 616

User data (DL) ⟶ 617

ADAPS release ⟶ 618a

Discard duplicate ⟶ 618b

ADAPS release ⟶ 618c

Stop operation ⟶ 619

User data (DL/UL) ⟶ 620

# FIG. 7

700

Determining the one or more network parameters associated with at least one of the plurality of UEs and the source aerial cell, wherein the plurality of UEs is connected with the source aerial cell — 701

Selecting one or more UEs from the plurality of UEs that require the HO from the source aerial cell to a target aerial cell based on the one or more determined network parameters — 702

Transmitting the HO request to the target aerial cell for the one or more selected UEs, wherein the target aerial cell prepares one or more network resources for the one or more selected UEs — 703

Receiving the acknowledgment of the transmitted HO request from the target aerial cell — 704

Transmitting the notification message to the one or more selected UEs for performing the HO by utilizing the DAPS — 705

Receiving, after transmitting the notification message, one or more data packets from the one or more selected UEs — 706

Aggregating one or more received data packets associated with the one or more selected UEs at the source aerial cell — 707

Compressing the aggregated data packets into a single payload — 708

Transmitting the compressed payload to the target aerial cell, to facilitate seamless transitions between aerial cells — 709

# FIG. 8

User requirement forecast, 5QI

Replacement type

Deployment type

800

System optimization (ACeR) module 542)

User set for HO

User set for link management

User set for ACC

User set for ADAPS

# FIG. 9

900

| Receiving the aerial cell replacement trigger message from the source aerial cell | 901 |

| Initiating, upon receiving the aerial cell replacement trigger message, the replacement event for the source aerial cell | 902 |

| Determining one or more network parameters associated with at least one of the plurality of UEs and the source aerial cell during initiation of the replacement process, wherein the plurality of UEs is connected with the source aerial cell | 903 |

| Selecting an optimal protocol for data session transfer for each UE during initiation of the replacement event based on at least one the aerial cell replacement trigger message and the one or more determined network parameters | 904 |

| Performing the at least one action based on the selected optimal protocol for data session transfer | 905 |